(19) **Europäisches Patentamt / European Patent Office / Office européen des brevets**

(11)  **EP 3 837 701 B1**

(12)  **FASCICULE DE BREVET EUROPEEN**

(45) Date de publication et mention de la délivrance du brevet:
**07.06.2023  Bulletin 2023/23**

(21) Numéro de dépôt: **19790660.5**

(22) Date de dépôt: **17.09.2019**

(51) Classification Internationale des Brevets (IPC):
**G21G 1/00** *(2006.01)*    **C22B 13/06** *(2006.01)*

(52) Classification Coopérative des Brevets (CPC):
**G21G 1/001;** G21G 2001/0094

(86) Numéro de dépôt international:
**PCT/FR2019/052165**

(87) Numéro de publication internationale:
**WO 2020/065180 (02.04.2020 Gazette 2020/14)**

(54) **PROCÉDÉ DE PRODUCTION DE PLOMB-212 À PARTIR D'UNE SOLUTION AQUEUSE COMPRENANT DU THORIUM-228 ET SES DESCENDANTS**

VERFAHREN ZUR HERSTELLUNG VON BLEI-212 AUS EINER WÄSSRIGEN LÖSUNG MIT THORIUM-228 UND DESSEN ABKÖMMLINGEN

METHOD FOR PRODUCING LEAD-212 FROM AN AQUEOUS SOLUTION COMPRISING THORIUM-228 AND ITS DESCENDANTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.09.2018  FR 1858833**

(43) Date de publication de la demande:
**23.06.2021  Bulletin 2021/25**

(73) Titulaire: **Orano Med**
**92320 Chatillon (FR)**

(72) Inventeurs:
• **DUREAU, Rémy**
  **87510 SAINT-GENCE (FR)**
• **TORGUE, Julien**
  **GAITHERSBURG, Maryland 20878 (US)**

(74) Mandataire: **Brevalex**
**Tour Trinity**
**1 Bis Esplanade de La Défense**
**CS 60347**
**92035 Paris La Défense Cedex (FR)**

(56) Documents cités:
**WO-A1-2013/174949    WO-A1-2017/093069**

**Description**

**DOMAINE TECHNIQUE**

L'invention se rapporte au domaine de la production d'isotopes radioactifs, aussi dits radioisotopes.

Plus spécifiquement, elle se rapporte à un procédé qui permet de produire du plomb-212 de très haute pureté radiologique à partir d'une solution aqueuse comprenant du thorium-228 et ses descendants, aussi dits produits de filiation.

Ce procédé est donc susceptible de trouver des applications dans la fabrication de radiopharmaceutiques à base de plomb-212, utiles en médecine nucléaire et, en particulier, en radiothérapie alpha ciblée pour le traitement des cancers.

**ÉTAT DE LA TECHNIQUE ANTÉRIEURE**

Le plomb 212 est un isotope radioactif rare du plomb, qui fait l'objet depuis plusieurs années de recherches prometteuses, notamment pour le traitement par radiothérapie alpha ciblée, aussi appelée alphathérapie ciblée, de cancers et, en particulier, des cancers du pancréas, des ovaires, du côlon, du sein et de la prostate.

Le plomb-212 fait également partie des radioisotopes dont il a été montré qu'ils présentent un intérêt en imagerie médicale, notamment pour réaliser des examens par tomographie par émission monophotonique couplée à un scanner.

Dans les deux cas, l'utilisation du plomb-212 implique que celui-ci soit injecté au patient sous la forme d'un radiopharmaceutique, c'est-à-dire d'un produit dans lequel il est lié, typiquement par l'intermédiaire d'un agent chélatant, à une molécule capable de cibler très spécifiquement les cellules que l'on souhaite détruire (s'il s'agit d'alpha-thérapie ciblée) ou observer (s'il s'agit d'imagerie médicale), telle qu'un anticorps.

Pour ce faire, le plomb-212 doit satisfaire à des exigences de qualité extrêmement strictes et, notamment, de pureté radiologique, celle-ci devant être idéalement au moins égale à 99,95 %.

À cet égard, on entend par pureté radiologique d'un radioisotope comme le plomb-212, la pureté que ce radioisotope présente vis-à-vis des radioisotopes dont il est issu par désintégration radioactive ainsi que vis-à-vis des autres radioisotopes qui ne font pas partie de sa chaîne de désintégration radioactive, et non pas la pureté que ce radioisotope présente vis-à-vis des radioisotopes auxquels il donne naissance par sa propre désintégration radioactive, c'est-à-dire ses descendants.

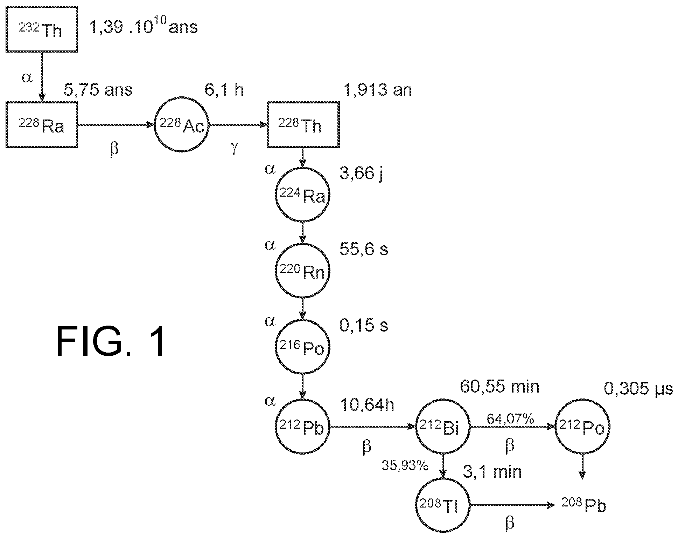

Comme l'illustre la figure 1 jointe en annexe, qui représente la chaîne de désintégration, aussi dite de décroissance, radioactive du thorium-232, le plomb-212 appartient à la famille radioactive du thorium-232 dont il est un produit de filiation. Il est également un produit de filiation du thorium-228 et du radium-224 qui s'inscrivent, dans cette chaîne, entre le thorium-232 et le plomb-212.

Pour produire du plomb-212 de qualité médicale, c'est-à-dire répondant aux exigences précitées de pureté radiologique, il a été proposé dans les demandes internationales PCT WO 2013/174949 et WO 2017/093069, ci-après références **[1]** et **[2]**, des procédés qui comprennent :

- la production de plomb-212 par désintégration radioactive du radium-224 dans un générateur comprenant un milieu solide sur lequel est retenu le radium-224 ;
- l'extraction du plomb-212 du générateur sous la forme d'une solution aqueuse fortement acide ; et
- la purification du plomb-212 par une chromatographie en phase liquide.

Cette chromatographie est réalisée en chargeant avec la solution aqueuse fortement acide une colonne de chromatographie comprenant une phase stationnaire qui, à forte acidité, retient le plomb mais ne retient pas les impuretés radiologiques susceptibles d'être présentes dans cette solution aqueuse, puis en lavant la phase stationnaire avec une solution aqueuse, également fortement acide, pour éliminer de la colonne lesdites impuretés radiologiques et en éluant ensuite le plomb-212 au moyen d'une solution aqueuse, de pH compris entre 5 et 9, ce qui permet de le récupérer sous une forme purifiée.

La production de plomb-212 par les procédés décrits dans les références **[1]** et **[2]** nécessite que soit préalablement produit du radium-224.

Un générateur est typiquement une colonne de chromatographie en phase liquide qui comprend une phase stationnaire solide sur laquelle est retenu sélectivement un radioisotope père et qui est régulièrement lavée avec une phase liquide permettant d'éluer le ou les radioisotopes fils qui se forme(nt) dans cette colonne par désintégration radioactive du radioisotope père.

Compte-tenu de l'affinité que doit présenter la phase stationnaire d'un générateur vis-à-vis d'un élément métallique particulier, on comprend que les phases stationnaires qui sont respectivement utilisées dans des générateurs de radium-224 et de plomb-212 soient constituées de matériaux de phase stationnaire qui non seulement sont différents les uns des autres mais sont aussi différents du matériau de phase stationnaire qui est utilisé, dans les références [1] et [2], pour purifier le plomb-212.

Or, pour simplifier la production du plomb-212 et, par là même, en alléger les coûts, il serait souhaitable de pouvoir réduire à la fois le nombre de générateurs différents et le nombre de matériaux de phase stationnaire différents qui sont actuellement utilisés pour cette production.

Par ailleurs, chaque générateur peut, en théorie, être utilisé aussi longtemps que la quantité de radioisotope père qui est fixée sur la phase stationnaire de ce générateur est suffisante pour assurer une production du radioisotope fils avec un rendement satisfa isa nt.

Or, en pratique, il s'avère que le maintien prolongé d'un radioisotope père sur une phase stationnaire provoque une dégradation progressive de cette phase stationnaire par radiolyse, ce qui affecte peu à peu sa capacité à retenir le radioisotope père, avec à la clé, l'apparition de fuites de ce radioisotope, l'obligation d'effectuer une maintenance régulière du générateur pour prévenir l'apparition de ces fuites et, malgré cette maintenance, une mise au rebut prématurée du générateur. Or, là également, cette mise au rebut prématurée participe à alourdir les coûts de production du plomb-212.

Compte-tenu de ce qui précède, les Inventeurs se sont fixé pour but de fournir un procédé qui permette de produire du plomb-212 ayant une pureté radiologique comparable à celle du plomb-212 obtenu dans les références [1] et [2] mais à des coûts notablement moindres, notamment par un allègement de la maintenance de cette production.

## EXPOSÉ DE L'INVENTION

L'invention vise justement à proposer un procédé de production de plomb-212 à partir d'une solution aqueuse A1 acide comprenant du thorium-228 et ses descendants, qui répond à ces exigences.

Ce procédé comprend :

- une purification du plomb-212 présent dans la solution aqueuse A1, laquelle purification comprend les étapes suivantes :

   a) fourniture d'une première colonne de chromatographie comprenant une première phase stationnaire qui retient sélectivement le plomb par rapport au thorium et au radium lorsque le thorium-228 et ses descendants sont dans une solution aqueuse acide ayant un pH compris entre une première valeur de pH, $pH_1$, et une deuxième valeur de pH, $pH_2$, supérieure à $pH_1$ ;
   b) chargement de la première colonne de chromatographie avec la solution aqueuse A1, la solution aqueuse A1 ayant un pH compris entre $pH_1$ et $pH_2$ ;
   c) au moins un lavage de la première phase stationnaire avec une solution aqueuse A2 acide ayant un pH compris entre $pH_1$ et $pH_2$ ;
   d) élution du plomb-212 de la première phase stationnaire avec une solution aqueuse A3 ayant un pH supérieur à $pH_2$, moyennant quoi on obtient une solution aqueuse A4 comprenant du plomb-212 ; puis

- une purification du plomb-212 présent dans la solution aqueuse A4, laquelle purification comprend les étapes suivantes :

   e) chargement d'une deuxième colonne de chromatographie avec la solution aqueuse A4, la deuxième colonne de chromatographie comprenant une deuxième phase stationnaire qui retient sélectivement le plomb par rapport au thorium et au radium lorsque le thorium-228 et ses descendants sont dans une solution aqueuse acide ayant un pH compris entre une première valeur de pH, $pH_3$, et une deuxième valeur de pH, $pH_4$, supérieure à $pH_3$ ;
   f) au moins un lavage de la deuxième phase stationnaire avec une solution aqueuse A5 ayant un pH compris entre $pH_3$ et $pH_4$ ; et
   g) élution du plomb-212 de la deuxième phase stationnaire avec une solution aqueuse A6 ayant un pH supérieur à $pH_4$.

On obtient ainsi une solution aqueuse qui comprend du plomb-212 de très haute pureté radiologique, et ce, en n'utilisant que deux phases stationnaires et sans utiliser ni générateur de radium-224 ni générateur de plomb-212.

Dans ce qui précède et ce qui suit, on entend par « descendants » du thorium-228 tous les radioisotopes qui s'inscrivent en aval du thorium-228 dans la chaîne de désintégration du thorium-232 illustrée sur la figure 1 (c'est-à-dire le radium-224, le radon-220, le polonium-216, le plomb-212, le bismuth-212, le thallium-208 et le polonium-212) ainsi que le plomb-208, isotope stable du plomb, qui termine cette chaîne.

Par ailleurs, les expressions « de ... à ... », « allant de ... à ... » et « compris(e) entre ... et ... » sont équivalentes et entendent signifier que les bornes sont incluses.

Conformément à l'invention, les première et deuxième phases stationnaires peuvent être en des matériaux identiques ou différents, lesquels peuvent être choisis parmi tous les matériaux qui sont capables de retenir le plomb mais ne retiennent pas le thorium et le radium lorsque ces matériaux sont mis en contact avec une solution aqueuse acide ayant une certaine acidité (définie ici comme s'inscrivant entre $pH_1$ et $pH_2$ pour la première phase stationnaire et entre $pH_3$ et $pH_4$ pour la deuxième phase stationnaire) et dans laquelle se trouvent du thorium-228 et ses descendants. Lorsque les première et deuxième phases stationnaires sont constituées du même matériau, alors $pH_1$ est égal à $pH_3$ tandis que $pH_2$ est égal à $pH_4$.

De tels matériaux peuvent comprendre un support solide inerte, inorganique (tel que des particules de silice ou d'alumine ou un gel de silice), organique (tel qu'un polymère) ou inorganique-organique, qui est fonctionnalisé, par greffage ou imprégnation, par des molécules organiques qui retiennent les ions plomb ($Pb^{2+}$) par échange d'ions, extraction, reconnaissance moléculaire ou tout autre mécanisme mais ne retiennent pas les ions thorium et radium.

Par ailleurs, l'acide présent dans les solutions aqueuses A1, A2 et A5 peut être tout acide, fort ou faible, cet acide étant, de préférence, le même dans les solutions aqueuses A1, A2 et A5.

Comme précédemment indiqué, l'étape c) comprend au moins un lavage de la première phase stationnaire avec une solution aqueuse A2 acide.

Ce lavage vise principalement à retirer de la première colonne de chromatographie et, notamment, du volume interstitiel de la première phase stationnaire le thorium-228 et ses descendants autres que le plomb et, en particulier, le radium-224, susceptibles d'avoir été retenus dans la première colonne de chromatographie à l'étape b). De ce fait, il peut être réalisé avec une solution aqueuse A2 qui présente le même pH que celui de la solution aqueuse A1.

Toutefois, de façon avantageuse, ce lavage peut également être mis à profit pour préparer la première phase stationnaire à être mise en contact avec la solution aqueuse A3 qui, comme précédemment indiqué, a un pH supérieur à la limite haute, dite $pH_2$, de la gamme de pHs - et, donc, une acidité inférieure à la limite basse de la gamme d'acidités - pour lesquelles le plomb est retenu par le matériau de la première phase stationnaire lorsqu'il est présent dans une solution aqueuse acide.

Auquel cas, la solution aqueuse A2 est une solution qui, tout en ayant un pH compris entre $pH_1$ et $pH_2$, a un pH supérieur à celui de la solution aqueuse A1.

De préférence, l'étape c) comprend deux lavages successifs de la première phase stationnaire ayant chacun pour fonction de retirer de la première colonne de chromatographie le thorium-228 et ses descendants autres que le plomb susceptibles d'avoir été retenus dans la première colonne de chromatographie mais aussi de préparer la première phase stationnaire à être mise en contact avec la solution aqueuse A3.

Auquel cas, l'étape c) comprend un premier lavage de la première phase stationnaire avec la solution aqueuse A2 ayant un pH compris entre $pH_1$ et $pH_2$ mais supérieur au pH de la phase aqueuse A1 et un deuxième lavage de la première phase stationnaire avec une solution aqueuse A2' ayant un pH compris entre $pH_1$ et $pH_2$ mais supérieur au pH de la solution aqueuse A2.

Conformément à l'invention, la solution aqueuse A3, qui est utilisée à l'étape d), est avantageusement une solution aqueuse comprenant un agent complexant le plomb.

Cet agent complexant peut être choisi notamment parmi les ions citrates, oxalates ou acétates. Il peut également s'agir de glycine ou d'un acide amino-polycarboxylique, tel que l'acide éthylènediaminetétraacétique (ou EDTA), ou d'un sel de celui-ci tel qu'un sel de sodium. On préfère que cette solution soit une solution aqueuse d'un citrate, d'un oxalate ou d'un acétate d'ammonium ou de sodium dont le pH est compris entre 5 et 9, et mieux encore compris entre 5 et 7.

Sachant que, comme toute colonne de chromatographie, la première colonne de chromatographie a une première et une deuxième extrémité opposées l'une à l'autre, les solutions aqueuses A1 et A2 sont mises à circuler dans cette colonne de sa première extrémité vers sa deuxième extrémité tandis que la solution aqueuse A3 est, elle, de préférence mise à circuler dans le sens inverse, c'est-à-dire de la deuxième extrémité de la colonne vers sa première extrémité.

Dans le cas où la solution aqueuse A4 présente un pH supérieur à $pH_4$, alors le procédé comprend avantageusement de plus, entre les étapes d) et e), une acidification de la solution aqueuse A4 pour amener son pH à une valeur comprise entre $pH_3$ et $pH_4$. Bien entendu lorsque le matériau de la seconde phase stationnaire est identique à celui de la première phase stationnaire et lorsque la solution aqueuse A4 a un pH supérieur à $pH_2$, l'acidification de la solution aqueuse A4 vise à amener son pH à une valeur comprise entre $pH_1$ et $pH_2$.

Cette acidification peut être réalisée par un simple ajout d'acide à la solution aqueuse A4.

Toutefois, dans le cadre de l'invention, on préfère acidifier la solution aqueuse A4 en soumettant la première phase stationnaire à au moins un lavage avec une solution aqueuse A7 acide et en ajoutant tout ou partie de la solution aqueuse issue de ce lavage à la solution aqueuse A4.

Le volume de solution aqueuse A7 et sa concentration en acide sont donc avantageusement choisis pour que l'ajout de tout ou partie de la solution aqueuse A7 à la solution aqueuse A4 permette, à lui seul, d'amener le pH de la solution aqueuse A4 à une valeur comprise entre $pH_3$ et $pH_4$ ou entre $pH_1$ et $pH_2$ lorsque le matériau de la seconde phase stationnaire est identique à celui de la première phase stationnaire et, mieux encore, à une valeur de pH égale ou sensiblement égale à la valeur de pH de la solution aqueuse A1.

La solution aqueuse A7 est, de préférence, mise à circuler dans la première colonne de chromatographie de la deuxième extrémité de cette colonne vers sa première extrémité.

Comme précédemment indiqué, l'étape f) comprend au moins un lavage de la deuxième phase stationnaire avec une solution aqueuse A5 acide.

Là également, on préfère que ce lavage, outre de retirer de la deuxième colonne de chromatographie et, notamment, du volume interstitiel de la deuxième phase stationnaire, les traces de thorium-228 et de ses descendants autres que le plomb susceptibles d'avoir été retenues dans la deuxième colonne de chromatographie à l'étape e) ci-avant, permette de préparer la deuxième phase stationnaire à être mise en contact avec la solution aqueuse A6 qui, à l'instar de la solution aqueuse A3, a un pH supérieur à la limite haute de la gamme de pHs - et, donc, une acidité inférieure à la limite basse de la gamme d'acidités - pour lesquelles le plomb est retenu par le matériau de la deuxième phase stationnaire lorsqu'il est présent dans une solution aqueuse acide.

De ce fait, bien que le lavage de l'étape f) puisse être réalisé avec une solution aqueuse A5 qui présente le même pH que celui de la solution aqueuse A4, on préfère qu'il soit réalisé avec une solution aqueuse A5 qui, tout en ayant un pH compris entre $pH_3$ et $pH_4$, a un pH supérieur à celui de la solution aqueuse A4.

À l'instar de l'étape c), l'étape f) comprend, de préférence, deux lavages successifs de la deuxième phase stationnaire, à savoir un premier lavage que l'on réalise avec la solution aqueuse A5 ayant un pH compris entre $pH_3$ et $pH_4$ mais de pH supérieur au pH de la phase aqueuse A4 et un deuxième lavage que l'on réalise avec une solution aqueuse A5' acide qui, tout en ayant un pH compris entre $pH_3$ et $pH_4$, a un pH supérieur à celui de la solution aqueuse A5.

La solution aqueuse A6, qui est utilisée à l'étape g), est avantageusement une solution aqueuse comprenant un agent complexant le plomb.

Comme précédemment, cet agent complexant peut être choisi parmi les ions citrates, oxalates ou acétates, la glycine ou les acides aminopolycarboxyliques (tels que l'EDTA) et les sels de ces acides.

Là également, on préfère que cette solution soit une solution aqueuse d'un citrate, d'un oxalate ou d'un acétate d'ammonium ou de sodium dont le pH est compris entre 5 et 9, toute préférence étant donnée à un pH compris entre 5 et 7.

Par ailleurs, la solution aqueuse A6 est, de préférence mise à circuler dans la deuxième colonne de chromatographie dans le sens inverse de celui dans lequel sont mises à circuler les solutions aqueuses A4 acidifiée et A5.

Dans un mode de mise en oeuvre préféré de l'invention, les première et deuxième phases stationnaires sont en un matériau de phase stationnaire qui retient le plomb par extraction et, plus spécifiquement, en un matériau qui comprend un support solide imprégné d'une solution comprenant un éther-couronne comme extractant et, notamment, un dicyclohexano-18-couronne-6 ou un dibenzo-18-couronne-6 dont les groupes cyclohexyle ou benzyle sont substitués par un ou plusieurs groupes alkyle en $C_1$ à $C_{12}$, à chaîne droite ou ramifiée, dans un diluant organique non miscible à l'eau, typiquement un alcool à longue chaîne hydrocarbonée, c'est-à-dire en $C_8$ ou plus.

Plus encore, on préfère utiliser un matériau de phase stationnaire qui comprend le 4,4'(5')-di-tert-butylcyclohexano-18-couronne-6 comme extractant, de préférence en solution dans l'isodécanol.

Ce type de matériau phase stationnaire est notamment disponible sous forme de particules conditionnées en flacons mais également sous forme de colonnes de chromatographie prêtes à l'emploi, ou cartouches, auprès des sociétés Triskem International et Eichrom Technologies, Inc. sous le nom commercial *Résine Pb*.

Un tel matériau de phase stationnaire retient le plomb lorsqu'il est dans un milieu acide, par exemple nitrique ou chlorhydrique, à des valeurs de pH typiquement inférieures ou égales à 2.

Toutefois, dans le cadre de l'invention, on préfère que la solution aqueuse A1, qui est utilisée à l'étape b), soit une solution qui comprend de l'acide nitrique, avantageusement à hauteur de 1 mol/L à 2 mol/L d'acide nitrique et, mieux encore, à hauteur de 2 mol/L d'acide nitrique.

On préfère également que les autres solutions aqueuses acides utilisées dans le procédé comprennent, elles-aussi, de l'acide nitrique.

Auquel cas :

- si l'étape c) ne comprend qu'un seul lavage, alors la solution aqueuse A2 a, de préférence, une concentration en acide nitrique qui est au moins égale à 0,01 mol/L mais inférieure à 1 mol/L; tandis que
- si l'étape c) comprend deux lavages, alors :

    ∗ la solution aqueuse A2 a, de préférence, une concentration en acide nitrique qui est au moins égale à 0,5 mol/L mais inférieure à 1 mol/L, une concentration de 0,5 mol/L étant tout particulièrement préférée, et
    ∗ la solution aqueuse A2' a, de préférence, une concentration en acide nitrique au moins égale à 0,01 mol/L mais inférieure à 0,5 mol/L, une concentration de 0,1 mol/L étant tout particulièrement préférée.

De préférence, la phase aqueuse A4, qui est utilisée à l'étape f), comprend, comme la phase aqueuse A1, de 1 mol/L à 2 mol/L et, mieux encore, 2 mol/L d'acide nitrique.

Par ailleurs :

- si l'étape f) ne comprend qu'un seul lavage, alors la solution aqueuse A5 a, de préférence, une concentration en acide nitrique qui est au moins égale à 0,01 mol/L mais inférieure à 1 mol/L; tandis que
- si l'étape f) comprend deux lavages, alors :

 * la solution aqueuse A5 a, de préférence, une concentration en acide nitrique qui est au moins égale à 0,5 mol/L mais inférieure à 1 mol/L, une concentration de 0,5 mol/L étant tout particulièrement préférée, et
 * la solution aqueuse A5' a, de préférence, une concentration en acide nitrique au moins égale à 0,01 mol/L mais inférieure à 0,5 mol/L, une concentration de 0,1 mol/L étant tout particulièrement préférée.

Quant aux solutions aqueuses A3 et A6, il s'agit, de préférence, de solutions aqueuses d'un citrate, d'un oxalate ou d'un acétate d'ammonium ou de sodium dont le pH est au moins égal à 5 pour que les ions citrates, oxalates ou acétates puissent exercer leur pouvoir complexant vis-à-vis du plomb-212 et, ainsi, faciliter son élution de la première et de la deuxième phase stationnaire respectivement, et au plus égal à 9, toute préférence étant donnée à un pH compris entre 5 et 7.

Avantageusement, le thorium-228 et ses descendants sont à l'équilibre radioactif dans la solution aqueuse A1.

Dans le cas où l'on souhaite optimiser l'activité spécifique du plomb-212 que l'on désire produire, il est possible de prévoir, préalablement à l'étape a), une étape visant à éliminer le plomb-208, qui termine la chaîne de désintégration du thorium-232 et est susceptible de s'être accumulé dans la solution aqueuse A1 en tant qu'isotope stable du plomb.

Auquel cas, cette étape comprend une circulation de la solution aqueuse A1 dans une colonne de chromatographie comprenant une phase stationnaire qui retient sélectivement le plomb lorsque le thorium-228 et ses descendants sont dans une solution aqueuse acide, et un recueil de la solution aqueuse A1 ayant circulé dans la colonne de chromatographie.

Il suffit alors de laisser le plomb-212 se reformer par décroissance du radium-224 présent dans la solution aqueuse A1 pour pouvoir procéder à l'étape a), ce qui revient à attendre environ 48 heures avant de procéder à l'étape a).

Conformément à l'invention, la phase stationnaire utilisée pour éliminer le plomb-208 de la phase aqueuse A1 peut être constituée du même matériau que les première et deuxième phases stationnaires ou d'un matériau différent. Toutefois, dans l'objectif de réduire le nombre de matériaux de phase stationnaire différents utilisés, on préfère que le matériau constituant la phase stationnaire utilisée pour éliminer le plomb-208 de la phase aqueuse A1 soit le même matériau que celui qui constitue les première et deuxième phases stationnaires.

En plus des avantages déjà mentionnés, le procédé comprend l'avantage de pouvoir être mis en oeuvre sans utiliser d'acide chlorhydrique, qui est l'acide présent dans les solutions aqueuses acides utilisées dans les exemples des références [1] et [2]. Il est, en effet, avantageux de s'affranchir de l'utilisation d'acide chlorhydrique car il s'agit d'un acide hautement corrosif qui endommage à la longue les appareillages dans lesquels est mise en oeuvre la production de plomb-212.

D'autres caractéristiques et avantages du procédé de l'invention apparaîtront à la lecture du complément de description qui suit et qui se rapporte à un mode de mise en oeuvre préféré de ce procédé.

Il va de soi que ce mode de mise en oeuvre préféré n'est donné qu'à titre d'illustration de l'objet de l'invention et ne constitue en aucun cas une limitation de cet objet.

## BRÈVE DESCRIPTION DES FIGURES

La figure 1, déjà commentée, représente la chaîne de désintégration radioactive du thorium-232.

La figure 2 représente schématiquement les différentes étapes d'un mode de mise en oeuvre préféré du procédé de l'invention.

## EXPOSÉ DÉTAILLÉ D'UN MODE DE MISE EN ŒUVRE PARTICULIER

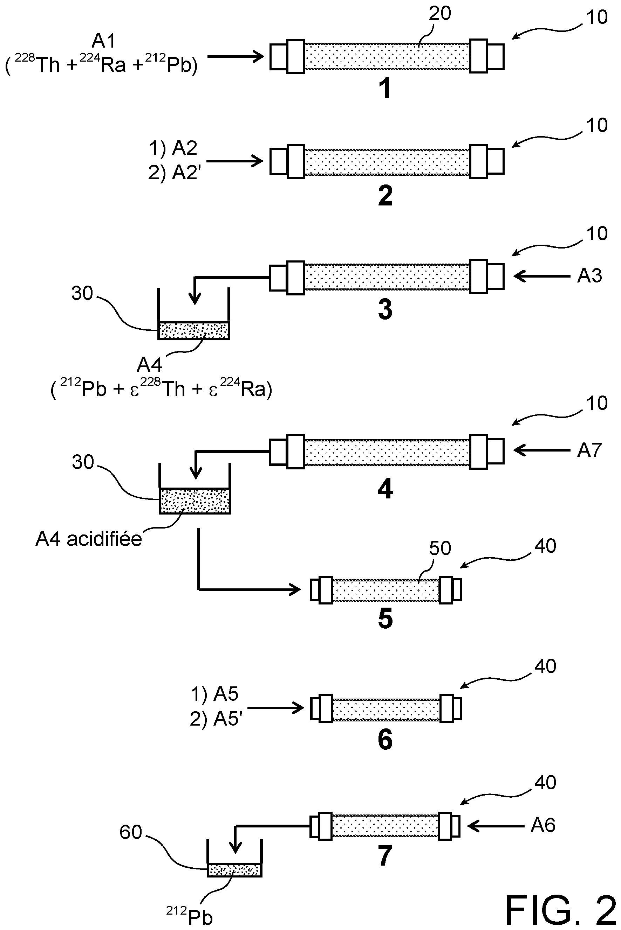

On se réfère à la figure 2 qui représente schématiquement les différentes étapes, notées 1 à 7, d'un mode de mise en oeuvre préféré du procédé de l'invention.

Dans ce mode de mise en oeuvre, le procédé comprend les étapes suivantes :

1. le chargement d'une première colonne de chromatographie, notée 10, dont la phase stationnaire, notée 20, est constituée de particules de *Résine Pb* avec une solution aqueuse A1 d'acide nitrique, qui comprend du thorium-228 et ses descendants, de préférence à l'équilibre radioactif, pour fixer sur la phase stationnaire 20 le plomb-212 contenu dans cette solution ;

2. deux lavages successifs de la phase stationnaire 20 avec deux solutions aqueuses A2 et A2' d'acide nitrique, de concentration décroissante, pour retirer de la colonne 10 les radioisotopes autres que le plomb-212 susceptibles d'avoir été retenus dans la colonne 10 à l'étape précédente tout en préparant la phase stationnaire 20 à être mise en contact, à l'étape suivante, avec une solution aqueuse de pH plus élevé ;

3. l'élution du plomb-212 de la phase stationnaire 20 au moyen d'une solution aqueuse A3 d'acétate d'ammonium et le recueil dans un récipient, noté 30, de type bécher, fiole ou analogue, de l'éluat, ou solution aqueuse A4, comprenant le plomb-212 ;

4. un lavage de la phase stationnaire 20 avec une solution aqueuse A7 d'acide nitrique et le recueil de la solution issue de ce lavage dans le récipient 30 pour acidifier l'éluat présent dans ce récipient ;

5. le chargement d'une deuxième colonne de chromatographie, notée 40, dont la phase stationnaire, notée 50, est constituée de particules de *Résine Pb,* avec le mélange éluat/solution de lavage, ou solution aqueuse A4 acidifiée, présent dans le récipient 30 pour fixer sur la phase stationnaire 50 le plomb-212 contenu dans ce mélange ;

6. deux lavages successifs de la phase stationnaire 50 avec deux solutions aqueuses A5 et A5' d'acide nitrique, de concentration décroissante, pour retirer de la colonne 40 les traces de radioisotopes autres que le plomb-212 susceptibles d'avoir été retenus dans la colonne 40 à l'étape précédente tout en préparant la phase stationnaire 50 à être mise en contact, à l'étape suivante, avec une solution aqueuse de pH plus élevé ; et

7. l'élution du plomb-212 de la phase stationnaire 50 au moyen d'une solution aqueuse A6 d'acétate d'ammonium et le recueil dans un récipient, noté 60, de l'éluat comprenant le plomb-212.

Toutes ces étapes, qui sont détaillées ci-après, sont effectuées à température ambiante, c'est-à-dire à une température de 20°C à 25°C.

Par ailleurs, toutes les solutions utilisées sont, de préférence, de grade Optima™ ou préparées à partir de réactifs de grade Optima™ ou de « grade Métaux en Traces » (ou « Trace Metals grade » en langue anglaise).

*\* Étape 1 :*

La colonne de chromatographie 10 est une colonne qui a, par exemple, un volume de lit (ou BV pour « Bed Volume ») allant de 0,104 mL à 1,25 mL et qui est remplie de particules de *Résine Pb* (de taille comprise entre 50 $\mu$m et 100 $\mu$m), par exemple à hauteur de 42 mg à 500 mg de particules selon le BV de la colonne.

À une acidité comprise entre 0,01 mol/L et 10 mol/L d'acide nitrique, la *Résine Pb* retient le plomb, quel qu'en soit l'isotope ($^{212}$Pb et $^{208}$Pb), mais ne retient pas le thorium-228 ni ses descendants autres que le plomb et, notamment, le radium, quels qu'en soient les isotopes.

Son affinité pour le plomb est, toutefois, optimale pour des concentrations en acide nitrique comprises entre 1 mol/L et 2 mol/L.

Le chargement de la colonne 10 est réalisé en faisant circuler dans cette colonne plusieurs BV de solution aqueuse A1, laquelle comprend :

- du thorium-228 et ses descendants, de préférence à l'équilibre radioactif, et, notamment, du radium-224 qui est issu de la désintégration radioactive du thorium-228, et du plomb-212 qui, lui, est issu de la désintégration radioactive du radium-224 ; et
- de l'acide nitrique, de préférence à hauteur de 1 mol/L à 2 mol/L et, mieux encore, de 2 mol/L pour obtenir, compte-tenu de ce qui précède, une rétention optimale du plomb-212 sur la phase stationnaire 20.

La solution aqueuse A1 est mise à circuler dans la colonne 10 à un débit qui est, de préférence, compris entre 0,5 BV/min et 2 BV/min.

Pour un BV de 0,104 mL à 1,25 mL, le volume de solution aqueuse A1 utilisé est avantageusement compris entre 80 mL et 400 mL tandis que l'activité du thorium-228 dans cette solution est comprise entre 2 mCi et 11 mCi.

*\* Étape 2 :*

Comme précédemment indiqué, cette étape consiste à soumettre la phase stationnaire 20 à deux lavages successifs qui ont chacun pour fonction :

- de retirer de la colonne 10 et, notamment, du volume interstitiel de la phase stationnaire 20 les radioisotopes autres que le plomb-212 et, en particulier, le thorium-228 et le radium-224, susceptibles d'avoir été retenus dans la colonne 10 à l'étape 1 ci-avant, et
- de préparer la phase stationnaire 20 à être mise en contact avec la solution aqueuse de sel d'ammonium qui est utilisée à l'étape 3 ci-après pour éluer le plomb-212 et, ainsi, faciliter cette élution.

De ce fait, les solutions aqueuses A2 et A2' utilisées pour ces lavages sont deux solutions d'acide nitrique mais la solution aqueuse A2, qui est utilisée pour le premier lavage, a une acidité inférieure à celle de la solution aqueuse A1 ayant été utilisée pour fixer le plomb-212 sur la phase stationnaire à l'étape 1 ci-avant, tandis que la solution aqueuse A2', qui est utilisée pour le deuxième lavage, a, elle-même, une acidité inférieure à celle de la solution aqueuse A2.

Les acidités des solutions aqueuses A2 et A2' doivent toutefois être choisies de sorte à éviter une élution du plomb-212 à ce stade du procédé.

Aussi :

- la solution aqueuse A2 comprend-elle, de préférence, au moins 0,5 mol/L mais moins de 1 mol/L d'acide nitrique et, mieux encore, 0,5 mol/L d'acide nitrique, tandis que
- la solution aqueuse A2' comprend-elle, de préférence, au moins 0,01 mol/L mais moins de 0,5 mol/L d'acide nitrique et, mieux encore, 0,1 mol/L d'acide nitrique.

Le nombre de BV utilisés est, par exemple, de 20 BV pour la solution aqueuse A2 et de 10 BV pour la solution aqueuse A2'.

Quant aux débits de circulation des solutions aqueuses A2 et A2' dans la colonne 10, il est, par exemple, de 1,6 BV/min pour les deux solutions.

*\* Étape 3 :*

L'élution du plomb-212 de la phase stationnaire 20 est réalisée en faisant circuler dans la colonne 10 plusieurs BV de la solution aqueuse A3 d'acétate d'ammonium, et ce, dans le sens inverse de celui dans lequel ont été réalisés le chargement de l'étape 1 ci-avant et les lavages de l'étape 2 ci-avant.

Le pH de la solution aqueuse A3 est au moins égal à 5 pour que les ions acétates puissent exercer leur pouvoir complexant vis-à-vis du plomb-212 mais il est, de préférence, au plus égal à 7 pour éviter d'avoir à utiliser, à l'étape 4 ci-après, un trop grand nombre de BV de solution aqueuse A7 pour acidifier l'éluat.

Idéalement, on utilise 25 BV d'une solution aqueuse A3 comprenant 0,4 mol/L d'acétate d'ammonium de pH égal à 6,5 que l'on fait circuler dans la colonne 10 à un débit de 1,6 BV/min.

*\* Étape 4 :*

Le lavage de la phase stationnaire 20 prévu à cette étape sert non seulement à laver la colonne 10 mais également à acidifier l'éluat, ou solution aqueuse A4, recueilli à l'étape précédente en vue de la réalisation de l'étape 5 ci-après.

Aussi, ce lavage est-il réalisé en faisant circuler dans la colonne 10, également dans le sens inverse de celui dans lequel ont été réalisés le chargement de l'étape 1 ci-avant et les lavages de l'étape 2 ci-avant, plusieurs BV de la solution aqueuse A7 d'acide nitrique et en recueillant la solution issue de ce lavage dans le récipient 30 dans lequel a été recueilli l'éluat à l'étape 3 ci-avant. Ce recueil est avantageusement réalisé sous agitation de sorte que la solution issue du lavage se mélange à l'éluat au fur et à mesure de sa sortie de la colonne 10.

Le nombre de BV de solution aqueuse A7 utilisé pour ce lavage et la concentration en acide nitrique de cette solution sont avantageusement choisis de sorte à obtenir un mélange éluat/solution de lavage, ou solution aqueuse A4 acidifiée, dont la concentration en acide nitrique permettra de fixer de manière optimale le plomb-212 contenu dans ce mélange sur la phase stationnaire 50 utilisée à l'étape 5 ci-après ou, autrement dit, une solution aqueuse A4 acidifiée comprenant de 1 mol/L à 2 mol/L d'acide nitrique.

Typiquement, on utilise de 10 BV à 20 BV d'une solution aqueuse A7 comprenant de 2 mol/L à 4 mol/L d'acide nitrique.

Ainsi, par exemple, pour un éluat obtenu avec 25 BV d'une solution aqueuse A3 comprenant 0,4 mol/L d'acétate d'ammonium, 15 BV d'une solution aqueuse A7 comprenant 3 mol/L d'acide nitrique se sont révélés convenir parfaitement.

Le débit de circulation de la solution aqueuse A7 dans la colonne 10 est, par exemple, de 1,6 BV/min.

Si nécessaire, avant de procéder à l'étape suivante, la concentration en acide nitrique de la solution A4 acidifiée peut être ajustée par addition d'acide nitrique si l'on souhaite ajuster cette concentration à la hausse ou par addition d'eau ultrapure (résistivité : 18,2 MΩ.cm à 25°C) si on souhaite l'ajuster à la baisse.

*\* Étape 5 :*

Le plomb-212 présent dans la solution aqueuse A4 acidifiée ne répond pas encore au critère de pureté radiologique requis pour un usage médical.

Aussi, l'étape 5 consiste-t-elle à charger de nouveau une colonne de chromatographie remplie de particules de *Résine Pb* avec cette solution en vue de purifier davantage le plomb-212, notamment vis-à-vis des traces de thorium-228 et de radium-224 encore présentes dans la solution aqueuse A4 acidifiée.

La colonne de chromatographie 40, qui est utilisée pour ce faire, peut être une colonne identique en tout point à la colonne 10, avec le même volume de lit et la même quantité massique de particules de *Résine Pb.*

Toutefois, comme visible sur la figure 2, on préfère utiliser une colonne 40 aux dimensions notablement plus réduites que celles de la colonne 10 en vue d'accompagner la purification du plomb-212 d'une concentration de ce plomb.

Ainsi, on peut notamment utiliser une colonne 40 dont le BV et la masse de particules de *Résine Pb* sont de 4 à 7 fois plus petits que ceux de la colonne 10.

Le chargement de la phase stationnaire 50 avec la solution aqueuse A4 acidifiée est réalisé en faisant circuler cette solution dans la colonne 40 à un débit qui est, de préférence, compris entre 0,5 BV/min et 2 BV/min.

*\* Étape 6 :*

Les deux lavages prévus à cette étape ont les mêmes fonctions que ceux prévus à l'étape 2 ci-avant, à savoir :

- retirer de la colonne 40 et, notamment, du volume interstitiel de la phase stationnaire 50 les traces de radioisotopes autres que le plomb-212 et, en particulier, de thorium-228 et de radium-224, susceptibles d'avoir été retenues dans la colonne 40 à l'étape 5 ci-avant, et
- préparer la phase stationnaire 50 à être mise en contact avec la solution aqueuse A6 d'acétate d'ammonium qui est utilisée à l'étape 7 ci-après pour éluer le plomb-212 et, ainsi, faciliter cette élution.

De ce fait, ils sont, de préférence, réalisés avec des solutions aqueuses A5 et A5' d'acide nitrique, respectivement de même concentration que les solutions aqueuses A2 et A2' utilisées à l'étape 2 ci-avant et dans des conditions analogues à celles décrites pour cette étape 2.

*\* Étape 7 :*

Comme l'élution du plomb-212 de la phase stationnaire 20, l'élution du plomb-212 de la phase stationnaire 50 est réalisée en faisant circuler dans la colonne 40 plusieurs BV d'une solution aqueuse A6 d'acétate d'ammonium, de pH au moins égal à 5 et, mieux encore, compris entre 5 et 7 telle qu'une solution comprenant 0,4 mol/L d'acétate d'ammonium (pH = 6,5) que l'on fait circuler dans la colonne 40 à un débit, par exemple de 2 BV/min.

Les fractions d'éluat recueillies au cours de cette élution sont, de préférence, conservées en fonction de l'application médicale à laquelle est destiné le plomb-212.

Ainsi, il est possible de ne conserver que les fractions d'éluat les plus riches en plomb-212 pour obtenir une solution aqueuse concentrée en plomb-212 tout comme il est possible de conserver l'ensemble des fractions d'éluat mais au prix d'une dilution du plomb-212.

Le procédé de l'invention a été mis en oeuvre conformément au mode de réalisation qui vient d'être décrit en utilisant :

- étape 1 : une colonne 10 de BV égal à 0,63 mL, contenant 255 mg de particules de *Résine Pb* et dans laquelle ont été mis à circuler 275 BV d'une solution aqueuse A1 comprenant 6,1 mCi de thorium-228 et 2 mol/L d'acide nitrique, à un débit de 1 mL/min ;
- étape 2 : 20 BV d'une solution aqueuse A2 comprenant 0,5 mol/L d'acide nitrique, à un débit de 1 mL/min, puis 10 BV d'une solution aqueuse A2' comprenant 0,1 mol/L d'acide nitrique, à un débit de 1 mL/min ;
- étape 3 : 25 BV d'une solution aqueuse A3 de pH égal à 6,5 et comprenant 0,4 mol/L d'acétate d'ammonium, à un débit de 1 mL/min ;
- étape 4 : 15 BV d'une solution aqueuse A7 comprenant 3 mol/L d'acide nitrique, à un débit de 1 mL/min ;
- étape 5 : une colonne 40 de BV égal à 0,104 mL, contenant 52 mg de particules de *Résine Pb* et dans laquelle a été mise à circuler la solution aqueuse A4 acidifiée obtenue à l'issue de l'étape 4 - ce qui correspond à 220 BV de solution aqueuse pour la colonne 40 compte-tenu du BV de cette colonne - à un débit de 0,2 mL/min ;
- étape 6 : 20 BV d'une solution aqueuse A5 comprenant 0,5 mol/L d'acide nitrique, à un débit de 1 mL/min, puis 10 BV d'une solution aqueuse A5' comprenant 0,1 mol/L d'acide nitrique, à un débit de 0,2 mL/min ;
- étape 7 : 40 BV d'une solution aqueuse A6 de pH égal à 6,5 et comprenant 0,4 mol/L d'acétate d'ammonium, à un débit de 0,2 mL/min.

Il a ainsi été obtenu une solution aqueuse comprenant du plomb-212 ayant une pureté radiologique au moins égale à 99,99 % vis-à-vis du thorium-228 et au moins égale à 99,95 % vis-à-vis du radium-224, c'est-à-dire une pureté radiologique qui est équivalente à celle obtenue dans les références [1] et [2].

Cette pureté radiologique a été déterminée en mesurant les activités du plomb-212, du thorium-228 et du radium-224 par spectrométrie γ et en appliquant les formules :

$$\text{Pureté du plomb-212 vis-à-vis du thorium-228} = [\text{activité } ^{212}\text{Pb}/(\text{activité } ^{212}\text{Pb} + \text{activité } ^{228}\text{Th})] \times 100 ;$$

$$\text{Pureté du plomb-212 vis-à-vis du radium-224} = [\text{activité } ^{212}\text{Pb}/(\text{activité } ^{212}\text{Pb} + \text{activité } ^{224}\text{Ra})] \times 100.$$

**RÉFÉRENCES CITÉES**

**[1]** WO-A-2013/174949
**[2]** WO-A-2017/093069

**Revendications**

**1.** Procédé de production de plomb-212 à partir d'une solution aqueuse A1 acide comprenant du thorium-228 et ses descendants, qui comprend les étapes successives suivantes :

- une purification du plomb-212 présent dans la solution aqueuse A1, laquelle purification comprend les étapes suivantes :

a) fourniture d'une première colonne de chromatographie (10) comprenant une première phase stationnaire (20) qui retient sélectivement le plomb par rapport au thorium et au radium lorsque le thorium-228 et ses descendants sont dans une solution aqueuse acide ayant un pH compris entre une première valeur de pH, $pH_1$, et une deuxième valeur de pH, $pH_2$, supérieure à pH, ;
b) chargement de la première colonne de chromatographie (10) avec la solution aqueuse A1, la solution aqueuse A1 ayant un pH compris entre $pH_1$ et $pH_2$ ;
c) au moins un lavage de la première phase stationnaire (20) avec une solution aqueuse A2 acide ayant un pH compris entre $pH_1$ et $pH_2$ ;
d) élution du plomb-212 de la première phase stationnaire (20) avec une solution aqueuse A3 ayant un pH supérieur à $pH_2$, moyennant quoi on obtient une solution aqueuse A4 comprenant du plomb-212 ; puis

- une purification du plomb-212 présent dans la solution aqueuse A4, laquelle purification comprend les étapes suivantes :

e) chargement d'une deuxième colonne de chromatographie (40) avec la solution aqueuse A4, la deuxième colonne de chromatographie comprenant une deuxième phase stationnaire (50) qui retient sélectivement le plomb par rapport au thorium et au radium lorsque le thorium-228 et ses descendants sont dans une solution aqueuse acide ayant un pH compris entre une première valeur de pH, $pH_3$, et une deuxième valeur de pH, $pH_4$, supérieure à $pH_3$ ;
f) au moins un lavage de la deuxième phase stationnaire (50) avec une solution aqueuse A5 acide ayant un pH compris entre $pH_3$ et $pH_4$ ; et
g) élution du plomb-212 de la deuxième phase stationnaire (50) avec une solution aqueuse A6 ayant un pH supérieur à $pH_4$.

**2.** Procédé selon la revendication 1, dans lequel la solution aqueuse A2 a un pH supérieur au pH de la solution aqueuse A1.

**3.** Procédé selon la revendication 1 ou la revendication 2, dans lequel l'étape c) comprend un premier lavage de la première phase stationnaire (20) avec la solution aqueuse A2 et un deuxième lavage de la première phase stationnaire (20) avec une solution aqueuse A2' ayant un pH compris entre $pH_1$ et $pH_2$ mais supérieur au pH de la solution aqueuse A2.

**4.** Procédé selon l'une quelconque des revendications 1 à 3, dans lequel les solutions aqueuses A3 et A6 sont des solutions aqueuses comprenant un agent complexant le plomb.

**5.** Procédé selon l'une quelconque des revendications 1 à 4, dans lequel la première colonne de chromatographie (10) a une première et une deuxième extrémité opposées l'une à l'autre, les solutions aqueuses A1 et A2 sont mises à circuler dans la première colonne de chromatographie de la première extrémité vers la deuxième extrémité et la solution aqueuse A3 est mise à circuler dans la première colonne de chromatographie de la deuxième extrémité vers la première extrémité.

**6.** Procédé selon l'une quelconque des revendications 1 à 5, qui comprend de plus, entre l'étape d) et l'étape e), une acidification de la solution aqueuse A4 pour amener le pH de la solution aqueuse A4 à une valeur comprise entre $pH_3$ et $pH_4$.

**7.** Procédé selon la revendication 6, dans lequel l'acidification de la solution aqueuse A4 comprend au moins un lavage de la première phase stationnaire (20) avec une solution aqueuse A7 acide et un ajout de tout ou partie de la solution aqueuse issue du lavage à la solution aqueuse A4.

**8.** Procédé selon l'une quelconque des revendications 1 à 7, dans lequel la solution aqueuse A5 a un pH supérieur au pH de la solution aqueuse A4.

**9.** Procédé selon l'une quelconque des revendications 1 à 8, dans lequel l'étape f) comprend un premier lavage de la deuxième phase stationnaire (50) avec la solution aqueuse A5 et un deuxième lavage de la deuxième phase stationnaire (50) avec une solution aqueuse A5' ayant un pH compris entre $pH_3$ et $pH_4$ mais supérieur au pH de la solution aqueuse A5.

**10.** Procédé selon l'une quelconque des revendications 1 à 9, dans lequel la deuxième colonne de chromatographie (40) a une première et une deuxième extrémité opposées l'une à l'autre, les solutions aqueuses A4 et A5 sont mises à circuler dans la deuxième colonne de chromatographie de la première extrémité vers la deuxième extrémité et la solution aqueuse A6 est mise à circuler dans la deuxième colonne de chromatographie de la deuxième extrémité vers la première extrémité.

**11.** Procédé selon l'une quelconque des revendications 1 à 10, dans lequel les première et/ou deuxième phases stationnaires (20, 50) sont en un matériau qui comprend un support solide imprégné d'une solution comprenant un éther-couronne dans un diluant organique non miscible à l'eau, de préférence un alcool à 8 atomes de carbone ou plus.

**12.** Procédé selon la revendication 11, dans lequel l'éther-couronne est un dicyclohexano-18-couronne-6 ou un dibenzo-18-couronne-6 dont les groupes cyclohexyles ou benzyles sont substitués par un ou plusieurs groupes alkyles en $C_1$ à $C_{12}$, à chaîne droite ou ramifiée, de préférence le 4,4'(5')-di-tert-butylcyclohexano-18-couronne-6 dans l'isodécanol.

**13.** Procédé selon l'une quelconque des revendications 1 à 12, dans lequel :

- les solutions aqueuses A1 et A4 comprennent de 1 mol/L à 2 mol/L d'acide nitrique, et/ou
- la solution aqueuse A2 comprend au moins 0,01 mol/L d'acide nitrique et moins de 1 mol/L d'acide nitrique, et/ou
- la solution aqueuse A5 comprend au moins 0,1 mol/L d'acide nitrique et moins de 1 mol/L d'acide nitrique.

**14.** Procédé selon l'une quelconque des revendications 1 à 13, dans lequel les solutions A3 et A6 sont des solutions aqueuses d'un citrate, d'un oxalate ou d'un acétate d'ammonium ou de sodium dont le pH est au moins égal à 5 et au plus égal à 9.

**15.** Procédé selon l'une quelconque des revendications 1 à 14, qui comprend de plus, avant l'étape a), une étape d'élimination du plomb-208 présent dans la solution aqueuse A1, laquelle étape comprend une circulation de la solution aqueuse A1 dans une colonne de chromatographie comprenant une phase stationnaire qui retient sélectivement le plomb lorsque le thorium-228 et ses descendants sont dans une phase aqueuse acide, et un recueil de la solution aqueuse A1 ayant circulé dans la colonne de chromatographie.

**Patentansprüche**

1. Verfahren zur Herstellung von Blei-212 aus einer wässrigen sauren Lösung A1, umfassend Thorium-228 und dessen Abkömmlinge, das die folgenden aufeinanderfolgende Schritte umfasst:

   - eine Bereinigung des Bleis-212, das in der wässrigen Lösung A1 vorhanden ist, wobei die Bereinigung die folgenden Schritte umfasst:

     a) Bereitstellung einer ersten Chromatographiesäule (10), umfassend eine erste stationäre Phase (20), die selektiv das Blei zurückhält im Verhältnis zu dem Thorium und dem Radium, während sich das Thorium-228 und dessen Nachkömmlinge in einer wässrigen sauren Lösung befinden, die einen ph-Wert aufweist zwischen einem ersten pH-Wert, $pH_1$, und einem zweiten pH-Wert, $pH_2$, der höher ist als $pH_1$;
     b) Ladung der ersten Chromatographiesäule (10) mit der wässrigen Lösung A1, wobei die wässrige Lösung A1 einen pH-Wert zwischen $pH_1$ und $pH_2$ aufweist;
     c) wenigstens eine Auswaschung der ersten stationären Phase (20) mit einer wässrigen sauren Lösung A2, die einen pH-Wert zwischen $pH_1$ und $ph_2$ aufweist;
     d) Elution des Bleis-212 der ersten stationären Phase (20) mit einer wässrigen Lösung A3, die einen pH-Wert höher als $pH_2$ aufweist, über die man eine wässrige Lösung A4 erhält, die Blei-212 umfasst; dann

     - eine Bereinigung von dem Blei-212, das in derwässrigen Lösung A4 vorhanden ist, wobei die Bereinigung die folgenden Schritte umfasst:

     e) Ladung einer zweiten Chromatographiesäule (40) mit der wässrigen Lösung A4, wobei die zweite Chromatographiesäule eine zweite stationäre Phase (50) umfasst, die das Blei selektiv zurückhält im Vergleich zu dem Thorium und dem Radium, während sich das Thorium-228 und seine Abkömmlinge in einer wässrigen sauren Lösung befinden, die einen pH-Wert zwischen einem ersten pH-Wert, $pH_3$, und einem zweiten pH-Wert, $pH_4$, der höher ist als $pH_3$, aufweist,
     f) wenigstens eine Auswaschung der zweiten stationären Phase (50) mit einer wässrigen sauren Lösung A5, die einen pH-Wert zwischen $pH_3$ und $pH_4$ aufweist; und
     g) Elution des Bleis-212 in der zweiten stationären Phase (50) mit einer wässrigen Lösung A6, die einen pH-Wert höher als $pH_4$ aufweist.

2. Verfahren nach Anspruch 1, wobei die wässrige Lösung A2 einen pH-Wert aufweist, der höher ist als der pH-Wert der wässrigen Lösung A1.

3. Verfahren nach Anspruch 1 oder Anspruch 2, wobei der Schritt c) eine erste Auswaschung der ersten stationären Phase (20) mit der wässrigen Lösung A2 und eine zweite Auswaschung der ersten stationären Phase (20) mit einer wässrigen Lösung A2' umfasst, die einen pH-Wert aufweist, der zwischen $pH_1$ und $pH_2$ liegt, aber höher als der pH-Wert der wässrigen Lösung A2.

4. Verfahren nach einer der Ansprüche 1 bis 3, wobei die wässrigen Lösungen A3 und A6 wässriges Lösungen sind, die ein Mittel umfassen, das Blei komplexiert.

5. Verfahren nach einem der Ansprüche 1 bis 4, wobei die erste Chromatographiesäule (10) eine erste und eine zweite Extremität aufweist, die einander gegenüberliegen, die wässrigen Lösungen A1 und A2 in der ersten Chromatographiesäule von der ersten Extremität zu der zweiten Extremität zum Zirkulieren gebracht werden, und die wässrige Lösung A3 in der ersten Chromatographiesäule von der zweiten Extremität zu der ersten Extremität zum Zirkulieren gebracht wird.

6. Verfahren nach einer der Ansprüche 1 bis 5, das weiter zwischen dem Schritt d) und dem Schritt e) eine Ansäuerung der wässrigen Lösung A4 umfasst, um den pH-Wert der wässrigen Lösung A4 auf einen Wert zwischen $pH_3$ und $pH_4$ zu bringen.

7. Verfahren nach Anspruch 6, wobei die Ansäuerung der wässrigen Lösung A4 wenigstens eine Auswaschung der ersten stationären Phase (20) mit einer wässrigen sauren Lösung A7 und ein Hinzufügen der ganzen oder eines Teils der wässrigen Lösung, die aus der Waschung der wässrigen Lösung A4 entstanden ist, umfasst.

8. Verfahren nach einer der Ansprüche 1 bis 7, wobei die wässrige Lösung A5 einen pH-Wert aufweist, der höher ist als der pH-Wert der wässrigen Lösung A4.

9. Verfahren nach einer der Ansprüche 1 bis 8, wobei der Schritt f) eine erste Auswaschung der zweiten stationären Phase (50) mit der wässrigen Lösung A5 und eine zweite Lösung mit der zweiten stationären Phase (50) mit einer wässrigen Lösung A5' umfasst, die einen pH-Wert aufweist, der zwischen $pH_3$ und $pH_4$ liegt, aber höher ist als der pH-Wert der wässrigen Lösung A5.

10. Verfahren nach einer der Ansprüche 1 bis 9, wobei die zweite Chronomatographiesäule (40) eine erste und eine zweite Extremität aufweist, die einander gegenüberliegen, wobei die wässrigen Lösungen A4 und A5 in der zweiten Chromatographiesäule von der ersten Extremität zu der zweiten Extremität zum Zirkulieren gebracht werden und die wässrige Lösung A6 in der zweiten Chromatographiesäule von der zweiten Extremität zu der ersten Extremität zum Zirkulieren gebracht wird.

11. Verfahren nach einer der Ansprüche 1 bis 10, wobei die erste und/oder zweite stationäre Phase (20, 50) aus einem Material besteht, das einen festen Träger umfasst, der mit einer Lösung imprägniert ist, die einen Kronenäther in einem organischen, nicht mit Wasser vermischbaren Lösungsmittel umfasst, bevorzugt einen Alkohol mit 8 oder mehr Kohlenstoffatomen.

12. Verfahren nach Anspruch 11, wobei der Kronenäther ein Dicyclohexano-18-Krone-6 oder ein Dibenzo-18-Krone-6 ist, dessen Cyclohexyl- oder Benzylgruppen durch eine oder mehrere Alkylgruppen in $C_1$ bis $C_{12}$, verkettet oder verzweigt, substituiert sind, bevorzugt der 4,4'(5')-di-tert-butylcyclohexano-18-Krone-6 in Isodecanol.

13. Verfahren nach einer der Ansprüche 1 bis 12, wobei:

    - die wässrigen Lösungen A1 und A4 von 1 mol/l bis 2 mol/l Salpetersäure umfassen, und/oder
    - die wässrige Lösung A2 wenigstens 0,01 mol/l Salpetersäure und weniger als 1 mol/ Salpetersäure umfasst, und/oder
    - die wässrige Lösung A5 wenigstens 0,1 mol/l Salpetersäure und weniger als 1 mol/l Salpetersäure umfasst.

14. Verfahren nach einer der Ansprüche 1 bis 13, wobei die Lösungen A3 bis A6 wässrige Lösungen eines Ammonium- oder Sodiumzitrats, -oxalats oder -acetats sind, deren pH-Wert wenigstens gleich 5 und höchstens gleich 9 ist.

15. Verfahren nach einer der Ansprüche 1 bis 14, das weiter vor dem Schritt a) einen Schritt der Eliminierung des Bleis-208 umfasst, das in der Lösung A1 vorhanden ist, wobei der Schritt eine Zirkulation der wässrigen Lösung A1 in einer Chromatographiesäule umfasst, umfassend eine stationäre Phase, die selektiv das Blei zurückhält, während sich das Thorium-228 und dessen Abkömmlinge in einer wässrigen, sauren Phase befinden, und eine Sammlung der wässrigen Lösung A1, die in der Chromatographiesäule zirkuliert ist.

**Claims**

1. Method for producing lead-212 from an acidic aqueous solution A1 comprising thorium-228 and daughters thereof, which comprises the following successive steps:

    - a purification of the lead-212 present in the aqueous solution A1, which purification comprises the following steps:

        a) providing a first chromatography column (10) comprising a first stationary phase (20) which selectively retains lead with respect to thorium and radium when thorium-228 and the daughters thereof are in an acidic aqueous solution having a pH between a first pH value, $pH_1$, and a second pH value, $pH_2$, greater than $pH_1$;
        b) loading the first chromatography column (10) with the aqueous solution A1, the aqueous solution A1 having a pH between $pH_1$ and $pH_2$;
        c) at least one washing of the first stationary phase (20) with an acidic aqueous solution A2 having a pH

13

between $pH_1$ and $pH_2$;

d) eluting the lead-212 from the first stationary phase (20) with an aqueous solution A3 having a pH greater than $pH_2$, whereby an aqueous solution A4 comprising lead-212 is obtained; then

- a purification of the lead-212 present in the aqueous solution A4, which purification comprises the following steps:

e) loading a second chromatography column (40) with the aqueous solution A4, the second chromatography column comprising a second stationary phase (50) which selectively retains lead with respect to thorium and radium when thorium-228 and the daughters thereof are in an acidic aqueous solution having a pH between a first pH value, $pH_3$, and a second pH value, $pH_4$, greater than $pH_3$;

f) at least one washing of the second stationary phase (50) with an acidic aqueous solution A5 having a pH between $pH_3$ and $pH_4$; and

g) eluting the lead-212 from the second stationary phase (50) with an aqueous solution A6 having a pH greater than $pH_4$.

2. Method according to claim 1, wherein the aqueous solution A2 has a pH greater than the pH of the aqueous solution A1.

3. Method according to claim 1 or claim 2, wherein step c) comprises a first washing of the first stationary phase (20) with the aqueous solution A2 and a second washing of the first stationary phase (20) with an aqueous solution A2' having a pH between $pH_1$ and $pH_2$ but greater than the pH of the aqueous solution A2.

4. Method according to any one of claims 1 to 3, wherein the aqueous solutions A3 and A6 are aqueous solutions comprising an agent complexing lead.

5. Method according to any one of claims 1 to 4, wherein the first chromatography column (10) has a first and a second end opposite one another, the aqueous solutions A1 and A2 are circulated in the first chromatography column from the first end to the second end and the aqueous solution A3 is circulated in the first chromatography column from the second end to the first end.

6. Method according to any one of claims 1 to 5, which further comprises, between step d) and step e), an acidification of the aqueous solution A4 to bring the pH of the aqueous solution A4 to a value between $pH_3$ and $pH_4$.

7. Method according to claim 6, wherein the acidification of the aqueous solution A4 comprises at least one washing of the first stationary phase (20) with an acidic aqueous solution A7 and an addition of all or part of the aqueous solution issued from the washing to the aqueous solution A4.

8. Method according to any one of claims 1 to 7, wherein the aqueous solution A5 has a pH greater than the pH of the aqueous solution A4.

9. Method according to any one of claims 1 to 8, wherein step f) comprises a first washing of the second stationary phase (50) with the aqueous solution A5 and a second washing of the second stationary phase (50) with an aqueous solution A5' having a pH between $pH_3$ and $pH_4$ but greater than the pH of the aqueous solution A5.

10. Method according to any one of claims 1 to 9, wherein the second chromatography column (40) has a first and a second end opposite one another, the aqueous solutions A4 and A5 are circulated in the second chromatography column from the first end to the second end and the aqueous solution A6 is circulated in the second chromatography column from the second end to the first end.

11. Method according to any one of claims 1 to 10, wherein the first and/or second stationary phases (20, 50) are made of a material which comprises a solid support impregnated with a solution comprising a crown-ether in an organic diluent non-miscible with water, preferably an alcohol having 8 carbon atoms or more.

12. Method according to claim 11, wherein the crown-ether is a dicyclohexano-18-crown-6 or a dibenzo-18-crown-6 wherein the cyclohexyl or benzyl groups are substituted by one or more straight-chain or branched $C_1$ to $C_{12}$ alkyl groups, preferably 4,4'(5')-di-tert-butylcyclohexano-18-crown-6 in isodecanol.

**13.** Method according to any one of claims 1 to 12, wherein:

- the aqueous solutions A1 and A4 comprise from 1 mol/L to 2 mol/L of nitric acid, and/or
- the aqueous solution A2 comprises at least 0.01 mol/L of nitric acid and less than 1 mol/L of nitric acid, and/or
- the aqueous solution A5 comprises at least 0.1 mol/L of nitric acid and less than 1 mol/L of nitric acid.

**14.** Method according to any one of claims 1 to 13, wherein the solutions A3 and A6 are aqueous solutions of a citrate, an oxalate or an acetate of ammonium or sodium having a pH at least equal to 5 and at most equal to 9.

**15.** Method according to any one of claims 1 to 14, which further comprises, before step a), a step of removing the lead-208 present in the aqueous solution A1, which step comprises a circulation of the aqueous solution A1 in a chromatography column comprising a stationary phase which selectively retains lead when thorium-228 and the daughters thereof are in an acidic aqueous phase, and a collection of the aqueous solution A1 having circulated in the chromatography column.

FIG. 1

FIG. 2

**EP 3 837 701 B1**

## RÉFÉRENCES CITÉES DANS LA DESCRIPTION

**Documents brevets cités dans la description**

- WO 2013174949 A
- WO 2017093069 A